(19) Europäisches Patentamt
European Patent Office
Office européen des brevets

(11) **EP 3 726 423 B1**

(12) **FASCICULE DE BREVET EUROPEEN**

(45) Date de publication et mention de la délivrance du brevet:
**18.08.2021 Bulletin 2021/33**

(51) Int Cl.:
***G06K 9/00*** *(2006.01)*      ***G06K 9/20*** *(2006.01)*

(21) Numéro de dépôt: **20163862.4**

(22) Date de dépôt: **18.03.2020**

(54) **DISPOSITIF ET PROCÉDÉ D'ACQUISITION ET DE TRAITEMENT BIOMÉTRIQUE**

VORRICHTUNG UND VERFAHREN ZUR BIOMETRISCHEN ERFASSUNG UND VERARBEITUNG

DEVICE AND METHOD FOR BIOMETRIC ACQUISITION AND PROCESSING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2019 FR 1902978**

(43) Date de publication de la demande:
**21.10.2020 Bulletin 2020/43**

(73) Titulaire: **Idemia Identity & Security France**
**92400 Courbevoie (FR)**

(72) Inventeurs:
- **BEAUDET, Jean**
  **92400 Courbevoie (FR)**
- **THIEBOT, Alain**
  **92400 Courbevoie (FR)**
- **FOURRE, Joël-Yann**
  **92400 Courbevoie (FR)**

(74) Mandataire: **Regimbeau**
**20, rue de Chazelles**
**75847 Paris Cedex 17 (FR)**

(56) Documents cités:
**EP-A1- 3 413 233**

- **DAVID J. CUCCIA ET AL: "Quantitation and mapping of tissue optical properties using modulated imaging", JOURNAL OF BIOMEDICAL OPTICS, vol. 14, no. 2, 3 avril 2009 (2009-04-03), page 024012, XP055404860, ISSN: 1083-3668, DOI: 10.1117/1.3088140**

**Description**

DOMAINE TECHNIQUE

L'invention concerne un dispositif et un procédé d'acquisition et de traitement biométrique d'une image d'une partie du corps humain présentant des dermatoglyphes, permettant de faire à la fois à une détection de fraude pour authentifier qu'un objet est un élément du corps humain et à une reconnaissance biométrique d'identité, c'est-à-dire à une identification biométrique ou un enrôlement pour une identification biométrique.

ETAT DE LA TECHNIQUE

L'identification par empreintes papillaires est une des techniques les plus utilisées en biométrie. Les empreintes papillaires sont formées par des dermatoglyphes présentes sur l'épiderme en surface de la peau. Ces dermatoglyphes sont constitués de crêtes et de vallées, et sont une projection du dessin présent en profondeur sur le derme. Les dermatoglyphes présentent l'avantage d'être individuelles, immuables, et inaltérable, sauf altération profonde du derme.
Les parties du corps humain présentant des empreintes papillaires sont principalement constituées par les doigts, et on parle alors d'empreintes digitales, mais également par les paumes ou la plante des pieds. Plusieurs technologies sont possibles pour acquérir des empreintes papillaires à des fins d'identification. L'acquisition d'une image optique des empreintes digitales d'un doigt est la plus couramment utilisée et sera utilisée pour illustrer la présente invention. On parlera donc par la suite de doigt pour désigner la partie du corps humain présentant des empreintes papillaires, et d'empreintes digitales pour désigner les empreintes papillaires.
Dans une identification optique par empreintes digitales, une image d'un doigt illuminé est acquise et analysée pour identifier un individu. La méthode la plus employée consiste à acquérir l'image du doigt lorsque celui-ci est apposé sur une surface, et à exploiter les interactions optiques entre le doigt et cette surface pour identifier les empreintes digitales, et par comparaison avec une base de données, identifier l'individu.
Cependant, il est possible d'utiliser des leurres, des faux doigts reproduisant les caractéristiques sur la base desquelles se fondent l'analyse de l'image, et en particulier reproduisant les empreintes digitales. La forme la plus simple pour frauder un capteur biométrique basé sur l'analyse de la surface d'un doigt humain consiste à présenter au capteur une reproduction papier d'un doigt humain présentant des empreintes digitales. Ainsi, dans le cas courant d'une détection des empreintes digitales, il s'agit de présenter une photographie, présentée plane ou enroulée autour d'un doigt, sur laquelle est reproduite un doigt avec ses empreintes digitales. Une forme plus évoluée consiste à disposer, à la surface d'un doigt présenté au capteur, un leurre en silicone ou autre matériau tel que gélatine ou latex, ledit leurre reproduisant des empreintes digitales. Il est donc nécessaire de prévoir en sus un procédé de détection de fraude pour valider que l'objet analysé est bien un élément du corps humain, le plus souvent un doigt.
Différents procédés de détection de fraude ont été proposés, faisant en général appel à diverses propriétés d'un doigt vivant plus ou moins difficiles à reproduire. Par exemple, le document EP3413233A1 divulgue un procédé pour déterminer si le doigt présenté lors d'une authentification est réel ou faux en utilisant une mire non-uniforme prédéfinie tandis qu'une autre solution décrite par la demande FR2849246 A1 prévoit de mesurer l'impédance de l'objet à authentifier afin de détecter les fraudes, en utilisant des électrodes transparentes ajoutées à la surface d'un capteur optique pour réaliser une mesure d'impédance en complément de l'acquisition par le capteur de l'image des empreintes digitales. Ceci présente le défaut d'ajouter des étapes de processus de fabrication supplémentaires à la surface du capteur qui peuvent dans certains cas être techniquement difficiles à mettre en œuvre si les couches constituant le capteur sont fragiles comme lors de l'utilisation d'éléments organiques. Ceci présente aussi un coût supplémentaire en termes de fabrication et d'électronique de mesure de l'impédance. Il est donc préférable de pouvoir détecter les fraudes au moyen de l'image acquise par l'imageur. Il n'est alors pas nécessaire de prévoir d'éléments supplémentaires tels que des instruments de mesure d'impédance. On peut ainsi mettre en œuvre cette détection dans un capteur existant sans avoir à changer l'architecture de celui-ci, de façon simple et peu coûteuse.

PRESENTATION DE L'INVENTION

L'invention vise à permettre de mettre en œuvre un procédé d'acquisition et de traitement biométrique d'une image d'une partie du corps humain présentant des dermatoglyphes au moyen d'un dispositif simple et peu coûteux, pouvant mettre en œuvre à la fois une méthode de détection de fraude pour authentifier que la partie du corps humain est un élément authentique d'un corps humain et une méthode de reconnaissance biométrique d'identité à partir d'une image de la partie du corps humain éclairée par une même source lumineuse.
A cet effet, l'invention propose un dispositif d'acquisition et de traitement biométrique d'une image d'une partie du corps humain présentant des dermatoglyphes, comprenant :

- une surface de contact configurée pour que la partie du corps humain soit apposée sur cette surface de contact,
- une source lumineuse configurée pour éclairer la surface de contact,
- un imageur configuré pour acquérir une image de la partie du corps humain apposée sur la surface de contact,
- un système de traitement automatisé de données configuré pour recevoir l'image acquise par l'imageur,

caractérisé en ce que la source lumineuse est configurée pour projeter sur la partie du corps humain apposée sur la surface de contact une mire lumineuse présentant une modulation sinusoïdale d'intensité lumineuse selon une direction principale avec une fréquence de mire, et en ce que le système de traitement automatisé de données est configuré pour mettre en œuvre les étapes suivantes :

a) analyse de l'image acquise pour identifier dans celle-ci au moins une valeur d'un paramètre de composante périodique et une valeur d'un paramètre de composante continue d'une variation d'intensité lumineuse selon la direction principale, la valeur du paramètre de composante périodique étant représentative d'une amplitude d'une oscillation sinusoïdale de l'intensité lumineuse dans l'image acquise selon la direction principale à la fréquence de mire, la valeur du paramètre de composante continue étant représentative d'une moyenne des intensités lumineuses dans l'image acquise ;
b) mise en œuvre sur la base de la valeur du paramètre de composante continue et de la valeur du paramètre de composante périodique d'une méthode de détection de fraude pour authentifier que la partie du corps humain est un élément authentique d'un corps humain ;
c) compensation de l'oscillation sinusoïdale de l'intensité lumineuse dans l'image acquise par multiplication de l'intensité de l'image acquise par une fonction de correction comprenant un paramètre de correction représentatif d'une amplitude d'une oscillation sinusoïdale de l'intensité lumineuse dans l'image acquise selon la direction principale à la fréquence de mire, afin d'obtenir une image compensée ;
d) mise en œuvre d'une méthode de reconnaissance biométrique d'identité sur la base de l'image compensée.

Le dispositif est avantageusement complété par les caractéristiques suivantes, prises seules ou en quelconque de leurs combinaisons techniquement possibles :

- la fonction de correction correspond à l'inverse d'une fonction sinusoïdale prenant comme variable une coordonnée selon la direction principale et dont l'amplitude est la valeur du paramètre de correction ;
- le paramètre de composante périodique correspond à une amplitude d'une fonction sinusoïdale prenant comme variable une coordonnée selon la direction principale ;
- l'analyse de l'image comprend la détermination d'une transformée de Fourier de la distribution d'intensité de l'image, la valeur du paramètre de composante périodique étant déterminé à partir d'un coefficient de la transformée de Fourier à la fréquence de mire ;
- l'analyse de l'image comprend l'application à l'image acquise d'un filtre de Gabor pour obtenir une image filtrée, un paramètre du filtre de Gabor dans la direction principale correspondant à la fréquence de mire, la valeur du paramètre de composante périodique étant déterminée à partir de l'image filtrée ;
- la valeur du paramètre de composante périodique est la somme des modules de chacun des points de l'image filtrée ;
- la valeur du paramètre de correction correspond à la valeur du paramètre de composante périodique divisé par le paramètre de composante continue ;
- la valeur du paramètre de correction est déterminée à partir de la valeur du paramètre de composante périodique en utilisant une base de données associant une valeur de paramètre de correction à une valeur du paramètre de composante périodique ;
- la valeur du paramètre de correction est déterminée par de façon itérative par la mise en œuvre des étapes suivantes, pour une pluralité de valeurs à tester du paramètre de correction :
- l'image acquise est compensée par une fonction de correction prenant la valeur à tester du paramètre de correction comme paramètre et prenant comme variable la coordonnée dans la direction principale pour obtenir une image compensée,
- application d'un filtre de Gabor à l'image compensée pour obtenir une image filtrée, un paramètre du filtre de Gabor dans la direction principale correspondant à la fréquence de mire,
- détermination d'une mesure de la présence de l'oscillation sinusoïdale dans l'image filtrée,

la valeur du paramètre de correction étant la valeur à tester qui présente la mesure de la présence de l'oscillation sinusoïdale dans l'image filtrée la plus basse;

- la source lumineuse est munie d'un masque présentant une opacité variant sinusoïdalement dans la direction principale ;

- la fréquence de mire est comprise entre 0,2 cycle/mm et 0,5 cycle/mm.

L'invention concerne également un procédé d'acquisition et de traitement d'une image d'une partie du corps humain présentant des dermatoglyphes, ledit procédé étant mis en œuvre par un dispositif comprenant :

- une surface de contact configurée pour que la partie du corps humain soit apposée sur cette surface de contact,

    - une source lumineuse configurée pour éclairer la surface de contact,
    - un imageur configuré pour acquérir une image de la partie du corps humain apposée sur la surface de contact,
    - un système de traitement automatisé de données configuré pour recevoir l'image acquise par l'imageur,

le procédé comprenant les étapes suivantes :

- la source lumineuse projette sur la partie du corps humain apposée sur la surface de contact une mire lumineuse présentant une modulation sinusoïdale d'intensité lumineuse selon une direction principale avec une fréquence de mire ;
- l'imageur acquiert une image de la partie du corps humain apposée sur la surface de contact éclairée par la source lumineuse, et transmet l'image acquise au système de traitement automatisé de données;
- le système de traitement automatisé de données analyse l'image acquise pour identifier dans celle-ci au moins une valeur d'un paramètre de composante périodique et une valeur d'un paramètre de composante continue d'une variation d'intensité lumineuse selon la direction principale, la valeur du paramètre de composante périodique étant représentative d'une amplitude d'une oscillation sinusoïdale de l'intensité lumineuse dans l'image acquise selon la direction principale à la fréquence de mire, la valeur du paramètre de composante continue étant représentative d'une moyenne des intensités lumineuses dans l'image acquise ;
- le système de traitement automatisé de données met en œuvre sur la base de la valeur du paramètre de composante continue et de la valeur du paramètre de composante périodique une méthode de détection de fraude pour authentifier que la partie du corps humain est un élément authentique d'un corps humain ;
- le système de traitement automatisé de données compense l'oscillation sinusoïdale de l'intensité lumineuse dans l'image acquise par multiplication de l'intensité de l'image acquise par une fonction de correction comprenant un paramètre de correction représentatif d'une amplitude d'une oscillation sinusoïdale de l'intensité lumineuse dans l'image acquise selon la direction principale à la fréquence de mire, afin d'obtenir une image compensée ;
- le système de traitement automatisé de données met en œuvre une méthode de reconnaissance biométrique d'identité sur la base de l'image compensée.

L'invention concerne également un produit programme d'ordinateur comprenant des instructions de code de programme enregistrées sur un support non transitoire utilisable dans un ordinateur pour l'exécution des étapes du procédé selon l'invention mises en œuvre par le système de traitement automatisé de données lorsque ledit programme est exécuté sur un ordinateur utilisant ledit support non transitoire.

PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

- La figure 1 illustre schématiquement un dispositif d'acquisition et de traitement biométrique d'une image d'une partie du corps humain présentant des dermatoglyphes selon un mode de réalisation possible de l'invention ;
- La figure 2 montre un exemple de masque de la source lumineuse adapté pour générer la projection d'une mire présentant une modulation sinusoïdale d'intensité lumineuse ;
- La figure 3 est un diagramme illustrant schématiquement des étapes mises en œuvre lors de l'exécution d'un procédé d'acquisition et de traitement biométrique d'une image d'une partie du corps humain présentant des dermatoglyphes selon un mode de réalisation possible de l'invention ;
- La figure 4a montre un extrait d'un exemple d'image acquise d'un doigt authentique éclairé par la source lumineuse selon un mode de réalisation possible de l'invention ;
- La figure 4b montre un extrait d'un exemple d'image acquise d'un faux doigt éclairé par la source lumineuse selon un mode de réalisation possible de l'invention ;
- La figure 5a montre le profil d'intensité par ligne de l'image de la figure 4a ;
- La figure 5b montre le profil d'intensité par ligne de l'image de la figure 4b ;

- La figure 6a montre un extrait d'un exemple d'image acquise d'un doigt authentique éclairé par la source lumineuse selon un mode de réalisation possible de l'invention ;
- La figure 6b montre un extrait d'un exemple d'image compensée correspondant à l'image acquise de la figure 6a ;
- La figure 7a montre un extrait d'un exemple d'image acquise d'un faux doigt éclairé par la source lumineuse selon un mode de réalisation possible de l'invention ;
- La figure 7b montre un extrait d'un exemple d'image compensée correspondant à l'image acquise de la figure 7a.

DESCRIPTION DETAILLEE

## Dispositif d'acquisition et de traitement biométrique

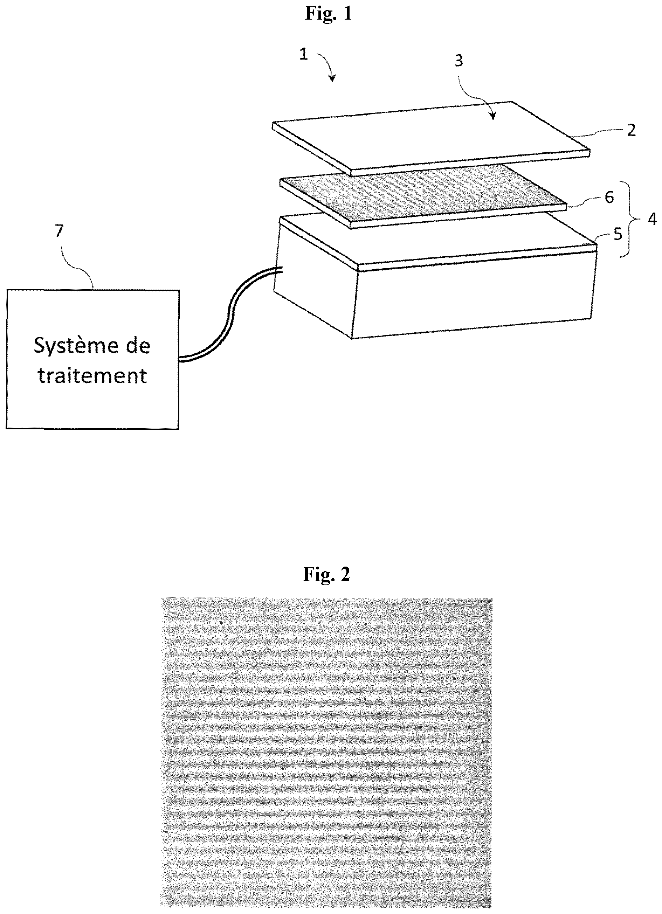

La figure 1 montre un exemple de dispositif d'acquisition et de traitement biométrique d'une image d'une partie du corps humain présentant des dermatoglyphes. Ce dispositif comprend essentiellement un capteur 1 et un système de traitement automatisé de données. Le capteur 1 comprend un imageur 2, une surface de contact 3 et une source lumineuse 4. La surface de contact 3 est configurée pour que la partie du corps humain, c'est-à-dire le doigt, soit apposée sur cette surface de contact 3. Avantageusement, cette surface de contact 3 peut être constituée par une surface de l'imageur 2 (comme sur la figure 1) ou de la source lumineuse 4. La surface de contact 3 peut également être la surface d'une couche de protection destinée à protéger le capteur 1. La source lumineuse 4 est configurée pour éclairer la surface de contact 3 qui est transparente afin que cet éclairage éclaire également le doigt apposé sur la surface de contact. La source lumineuse 4 est ainsi configuré pour éclairer la partie du corps humain lorsqu'elle est en contact avec la surface 3. L'imageur 2 est configuré pour acquérir une image de la partie du corps humain apposée sur la surface de contact 3, à travers la surface de contact 3.

Un exemple de capteur 1 peut être un capteur optique plat comprenant des éléments sensibles à la lumière constituant l'imageur 2. Ces éléments sensibles peuvent être réalisés sur un substrat par des technologies TFT, par exemple sur verre et OTFT, par exemple sur plastique. Avantageusement, le substrat peut être transparent et le capteur insensible à la lumière venant de la face arrière. Ces capteurs optiques nécessitent une source de lumière, fournie par la source lumineuse 4.

La source lumineuse 4 est configurée pour projeter sur la partie du corps humain apposée sur la surface 3 une mire lumineuse présentant une modulation sinusoïdale d'intensité lumineuse selon une direction principale avec une fréquence de mire au niveau de la surface de contact 3. Ainsi, si la mire lumineuse est projetée sur un objet opaque, très diffusant et très absorbant, où donc la propagation de la lumière à l'intérieur de l'objet est négligeable, comme du papier, disposé sur la surface de contact 3, l'intensité lumineuse dans l'image acquise suivra une loi sinusoïdale dans une direction avec une fréquence de mire.

La modulation sinusoïdale d'intensité lumineuse de la mire lumineuse dans la direction principale de coordonnée x peut être modélisée selon la formule suivante :
$\alpha \times cos(2\pi fx + \varphi) + \beta$ avec $\alpha$ l'amplitude de la sinusoïde, $\beta$ l'intensité moyenne, $\varphi$ une phase à l'origine et f la fréquence (spatiale) de mire. La fréquence de mire f est de préférence comprise entre 0,2 cycle/mm et 0,5 cycle par mm au niveau de la surface de contact. Une fréquence trop élevée, supérieure à 0,5 cycle/mm, peut engendrer des difficultés à distinguer les oscillations sinusoïdales par rapport aux informations de crêtes. Avec une fréquence trop faible, inférieure à 0,2 cycle/mm, il peut ne peut y avoir assez d'oscillations à la surface du doigt de l'image acquise. La fréquence de mire f est par exemple préférentiellement de 0,33 cycle/mm. La modulation sinusoïdale peut donc être exprimée par une fonction sinusoïdale d'une coordonnée x dans la direction principale. On entend par fonction sinusoïdale une fonction comprenant une fonction trigonométrique (sinus ou cosinus) additionnée d'une constante.

L'utilisation d'une modulation sinusoïdale d'intensité lumineuse apporte au moins trois avantages importants. Le premier est qu'une telle mire lumineuse est stable par floutage : même floutée, la mire lumineuse dans l'image acquise garde sa modulation sinusoïdale, et en particulier conserve la fréquence de mire. Un autre avantage est que l'aspect sinusoïdale de la modulation d'intensité lumineuse permet d'envisager une compensation de cette mire lumineuse dans l'image acquise, comme décrit plus bas. Enfin, la modulation sinusoïdale d'intensité lumineuse de la mire fait que l'éclairage incident est non nul sur la très grande majorité de la surface du doigt apposée sur la surface de contact 3, et typiquement l'éclairage incident n'y est jamais nul. Un tel éclairage permet donc d'illuminer suffisamment la surface apposée du doigt pour mettre en œuvre une méthode de reconnaissance biométrique d'identité, par exemple basée sur les empreintes digitales, à partir d'une image acquise du doigt éclairé par la source lumineuse 4.

La lumière émise par la source lumineuse 4 est de préférence dans le domaine visible, mais elle peut également être uniquement dans l'infrarouge, ou être dans le domaine visible et l'infrarouge. La lumière peut typiquement être une lumière blanche. L'intensité globale de la lumière émise par la source lumineuse 4 doit être suffisante pour permettre une visualisation des empreintes digitales du doigt, afin de permettre la mise en œuvre d'une méthode de reconnaissance biométrique d'identité à partir d'une image acquise du doigt éclairé par la source lumineuse 4. En option, plusieurs longueurs d'ondes peuvent être émises en même temps ou successivement. Dans ce cas, le procédé peut être appliqué indépendamment à chaque longueur d'onde pour déterminer des paramètres de composante continue et de composante périodique pour chaque longueur d'onde.

Dans l'exemple de la figure 1, la source lumineuse 4 comprend un organe d'éclairage 5 apte à émettre la lumière d'éclairage et un masque 6 présentant une opacité variant sinusoïdalement dans une direction principale, disposé devant l'organe d'éclairage 5. On entend par devant la direction dans laquelle est située la surface 3, qui est également la direction d'éclairage de la source lumineuse 4. Le masque 6 permet de modifier l'intensité lumineuse émise par l'organe d'éclairage 5 de sorte que la source lumineuse 4 projette sur la partie du corps humain apposée sur la surface 3 une mire lumineuse présentant une modulation sinusoïdale d'intensité lumineuse selon une direction principale avec une fréquence de mire.

La **figure** 2 présente un exemple d'un motif d'opacité présenté par le masque 6. Ce motif est constitué par une opacité variant sinusoïdalement dans la direction principale, ici dans la direction verticale de la figure 2. Le masque 6 peut être fabriqué de différentes manière. Le motif du masque 6 peut par exemple être un support en plastique transparent sur lequel est imprimé le motif du masque 6. Il est également possible que le masque 6 soit constitué par la surface de l'organe d'éclairage 5, sur laquelle est alors réalisé le motif. Il est possible par exemple de prévoir des puits de lumière de tailles différentes pour les pixels de l'organe d'éclairage 5, les tailles des puits de lumière variant sinusoïdalement dans la direction principale. Le masquage est de préférence au plus près de l'organe d'éclairage 5, pour limiter l'étalement du motif projeté. Il est encore possible de prévoir des pixels de l'organe d'éclairage 5 présentant des tailles et/ou des puissances variant sinusoïdalement dans la direction principale.

Par ailleurs, il est possible de prévoir un masque 6 présentant une opacité variant sinusoïdalement selon deux directions orthogonales entre elles, afin d'obtenir la projection d'une mire lumineuse présentant une modulation correspondant à la superposition de deux modulations sinusoïdales d'intensité lumineuse selon deux directions orthogonales avec deux fréquences de mire distinctes. Il en va de même de toute autre solution permettant la modulation sinusoïdale d'intensité lumineuse, qui peut être prévue pour permettre la superposition de deux modulations sinusoïdales d'intensité lumineuse selon deux directions orthogonales avec deux fréquences de mire distinctes.

Au lieu d'un masque 6, il est possible que la source lumineuse 4 soit un écran configuré pour afficher un motif d'affichage présentant une modulation sinusoïdale d'intensité lumineuse selon une direction principale, de sorte que cette modulation sinusoïdale d'intensité lumineuse se retrouve dans la mire projetée sur le doigt apposé sur la surface 3. La source lumineuse 4 peut ainsi être un écran émissif comprenant une matrice de pixel à la place du masque 6 et un organe d'éclairage 5 disposé derrière la matrice de pixel. L'écran émissif peut comprendre une matrice de pixels individuellement commandables. Il est également possible que les pixels ne soient commandables qu'en groupe. En particulier, dans la mesure où l'intensité lumineuse est modulée sinusoïdalement selon une seule direction principale, il est possible de se contenter de commander des pixels par lignes perpendiculaires à la direction principale. Ceci permet de limiter le nombre de transistors nécessaires à leur pilotage et de les placer à l'extérieur de la surface sensible, ce qui est particulièrement avantageux lorsque les lignes sont réalisées sur le même substrat que l'imageur 2.

L'état des pixels de la matrice définit le motif d'affichage de l'écran émissif. Il s'agit par exemple d'une configuration d'un écran de type à cristaux liquides ou OLED. Le substrat sur lequel sont réalisés les éléments sensibles à la lumière formant l'imageur 2 peut par exemple être au-dessus de l'écran émissif 1, comme illustré sur la **figure** 1. Le substrat est alors transparent pour laisser passer la lumière émise par l'écran émissif 1. On peut utiliser des technologies TFT ou OTFT, et un substrat en verre ou en plastique.

Une autre solution est de réaliser sur le substrat même du capteur des éléments émissifs de type OLED. Dans ce cas particulier, le capteur n'a plus besoin d'être transparent. D'autres configurations sont possibles, avec par exemple une source lumineuse 4 comprenant une matrice de diodes électroluminescentes organiques émettant de la lumière, qui peuvent être disposées au-dessus (i.e. dans la direction d'éclairage) de l'imageur 2. Dans ce cas, la surface 3 est celle de la source lumineuse 4. Il n'est pas alors nécessaire que le substrat de l'imageur 2 soit transparent. De préférence, dans le cas d'un écran OLED, celui-ci doit alors présenter à la fois une caractéristique de transparence (il laisse passer au moins 2% de la lumière arrivant du dessus vers le capteur) et une émission de lumière uniquement vers la face supérieure peut être utilisé au-dessus du capteur 1. Il est également possible de prévoir que la source lumineuse 4 soit dans le même plan que l'imageur 2, en interposant les éléments sensibles de l'imageur 2 et les éléments émetteurs de lumière.

L'imageur 2 est constitué par un substrat sur lequel sont réalisés des éléments sensibles à la lumière. La source lumineuse 4 est configurée pour illuminer le champ d'acquisition de l'imageur 2. A cette fin, la source lumineuse 4 et l'imageur 2 peuvent partager la même orientation : la source lumineuse 4 et l'imageur 2 peuvent être superposés, comme illustré sur la **figure 1,** ou coplanaires. Il est également possible que la source lumineuse 4 et l'imageur 2 ne partagent pas la même orientation, notamment lorsque qu'un système optique tel qu'un prisme ou une lame est utilisé pour diriger les faisceaux lumineux jusqu'à ou depuis la surface de contact 3. La source lumineuse 4 peut alors être à distance de l'imageur 2.

Les éléments sensibles de l'imageur 2 sont par exemples réalisés sur un substrat en verre et constitués de photo détecteurs, par exemple des photodiodes PIN réalisées à partir de silicium, des photodiodes organiques, ou bien tout autre élément sensible à la lumière. Le substrat pourrait également être en plastique, ou toute autre matière adéquate, permettant l'association avec la source lumineuse 4.

Les éléments sensibles forment des pixels adressables, notamment pouvant être lus. De manière conventionnelle, chaque pixel comporte un transistor de sélection, et ils sont organisés en ligne et en colonnes. Les commandes des transistors de sélection sont communes sur une ligne, et la lecture des niveaux des pixels se fait en colonne. Les transistors de sélection ou d'adressage sont par exemple des transistors à couche mince (TFT). De préférence, l'électronique de l'adressage en ligne des éléments sensibles est en totalité ou en partie réalisée sur le substrat, notamment pour limiter le nombre de connexions du substrat et donc le coût du système, ou permettre d'atteindre des résolutions supérieures. Dans le cas d'un substrat en verre, l'intégration de l'électronique requise pour l'adressage est favorisée par l'utilisation de la technologie TFT poly-Si ou les solutions de transistors en oxyde (oxyde de zinc gallium indium IGZO par exemple). Les solutions OTFT (transistor organique réalisé sur verre ou plus souvent plastique) permettent aussi de réaliser un tel capteur.

Les éléments sensibles à la lumière de l'imageur 2 peuvent être réalisés de sorte à ne pas être sensibles à la lumière venant directement de l'écran. Ceci peut être rendu possible en utilisant l'électrode inférieure alors réalisée avec un métal comme écran à la lumière. Les électrodes peuvent alors être employées pour définir les puits de lumière évoqué plus haut, afin de créer une modulation sinusoïdale de la transmission lumineuse de l'imageur 2. Eventuellement d'autres dépôts opaques peuvent être utilisés sous l'élément sensible. Des espaces où il n'y a aucun dépôt opaque sont aménagés entre les éléments sensibles afin de laisser une portion de la lumière émise par l'écran traverser le capteur. Cette portion peut être comprise entre 2 et 50%. Dans le cas où les OLEDs sont réalisés sur le même substrat que les éléments sensibles à la lumière, il n'y a plus de contrainte de transparence particulière du substrat.

Le système de traitement automatisé de données 7 du dispositif peut être composé d'une ou plusieurs unités de traitement, de mémoire, de logiciel, de données, d'organes d'entréessorties et de liaisons, notamment pour commander l'affichage de la source lumineuse 4, l'acquisition d'image par l'imageur 2, et le traitement de l'image acquise par l'imageur 2. Le système de traitement automatisé de données 7 peut être extérieur au capteur 1, comme illustré sur la figure 1 et être par exemple un ordinateur communiquant avec le capteur. Le système de traitement automatisé de données 7 peut également être intégré au capteur 1. Le système de traitement automatisé de données 7 peut être distante, et relié au capteur 1 par un réseau de communication. Le système de traitement automatisé de données 7 peut être composé de plusieurs parties, et différentes parties du procédé peuvent être mises en œuvre par des parties différentes du système de traitement automatisé de données 7, qui peuvent être distantes les unes des autres et peuvent communiquer entre elles par un réseau de communication.

**Procédé d'acquisition et de traitement biométrique**

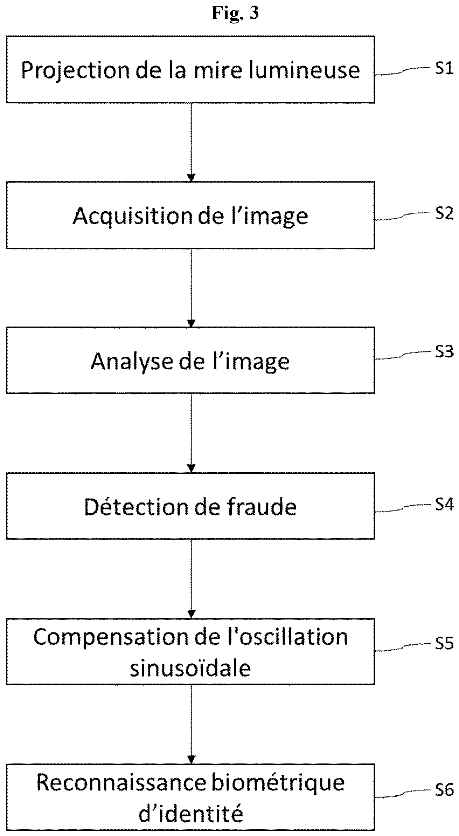

En référence à la **figure 3,** le procédé d'acquisition et de traitement biométrique d'une image est mis en œuvre lorsque le doigt est apposé sur la surface de contact 3. La source lumineuse 4 éclaire le doigt à travers la surface de contact 3. La mire lumineuse est ainsi projetée sur le doigt (étape S1). L'imageur 2 acquiert alors une image du doigt apposé sur la surface de contact 3, éclairé par la source lumineuse 4 (étape S2). L'imageur 2 transmet ensuite l'image acquise au système de traitement automatisé de données 7.

En raison de la mire lumineuse, l'image acquise présente une variation sinusoïdale d'intensité lumineuse selon la direction principale et à la fréquence de mire. L'image acquise contient également la représentation de la surface du doigt apposé sur la surface de contact 3. Les valeurs d'intensité lumineuse des pixels qui définissent l'image acquise résultent donc à la fois de la structure du doigt imagé et de la variation sinusoïdale causée par la modulation sinusoïdale d'intensité lumineuse de la mire lumineuse.

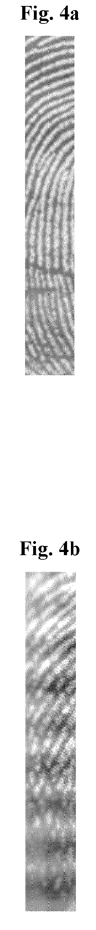

La **figure 4a** montre ainsi un exemple extrait d'une image acquise avec un doigt authentique. Cette acquisition a été faite avec une lumière rouge. On peut constater que les empreintes digitales sont clairement visibles, mais également que les lignes définissant ces empreintes digitales ainsi que les zones claires entre celles-ci présentent une variation sinusoïdale dans la direction verticale de la **figure 4a.** Toutefois, le taux de variation sinusoïdale dans l'image est modéré. En effet, la peau humaine a pour caractéristique de diffuser la lumière, ce qui atténue la non-uniformité de l'éclairage, et donc rend peu visible cette variation sinusoïdale dans l'image acquise. Cette diffusion est d'autant plus importante lorsque la longueur d'onde est supérieure à 600 nm (donc dans le rouge ou l'infrarouge). Néanmoins, comme évoqué plus haut, l'aspect sinusoïdal de la modulation d'intensité de la mire lumineuse est conservé dans la variation de l'intensité dans l'image acquise, malgré cette diffusion.

La **figure 4b** montre un exemple extrait d'une image acquise avec un faux doigt. Plus précisément, le faux doigt utilisé ici est une représentation photographique d'un doigt imprimé sur papier. Ici encore, l'image acquise présente des empreintes digitales et une variation sinusoïdale de l'intensité dans la direction verticale. Dans ce cas toutefois, cette variation apparaît bien plus visible que sur la figure précédente. De fait, le faux doigt ne présentant pas toutes les caractéristiques d'un doigt humain authentique, la diffusion de la mire lumineuse par le faux doigt n'est pas celle d'un doigt authentique, et l'atténuation de la non-uniformité de l'éclairage due à la modulation sinusoïdale d'intensité lumineuse de la mire est moindre. Il est à noter que pour d'autres types de fraudes, il serait possible d'avoir à l'inverse une atténuation de non-uniformité plus forte que pour un doigt authentique.

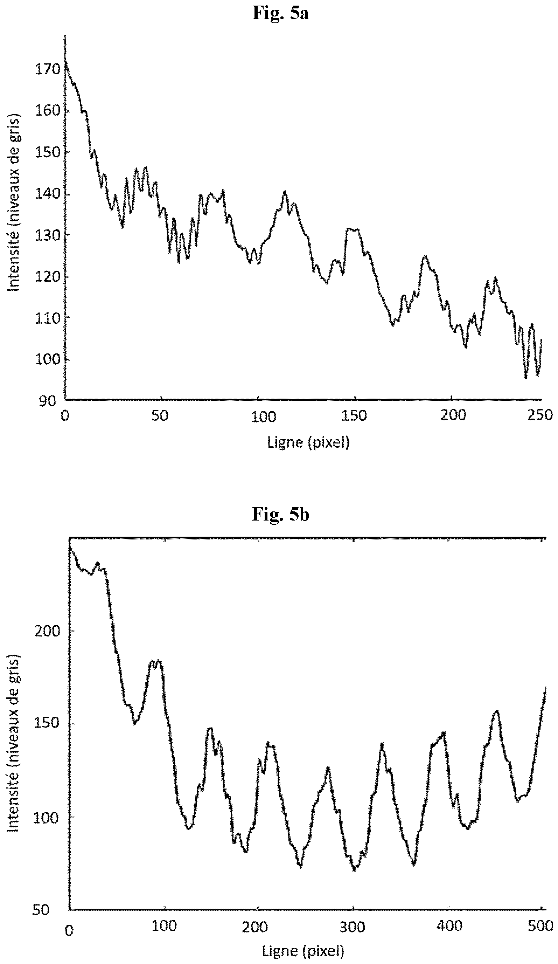

Les **figures 5a et 5b** montrent les profils d'intensité par ligne des images des figures 4a et 4b, respectivement. Plus précisément, il s'agit des moyennes par ligne des valeurs de niveaux de gris des pixels de ces images, en fonction de la ligne, dans la direction principale (direction verticale sur les figures 4a et 4b). Ces profils d'intensité mettent bien en évidence l'aspect périodique des modulations d'intensité moyenne (par ligne) sur les deux images. On constate toutefois que les profils sont assez différents, révélant les natures différentes des objets imagés - vrai doigt pour la figure 5a et faux doigt pour la figure 5b.

Par conséquent, les caractéristiques de la variation d'intensité lumineuse dans l'image acquise peuvent être considérées comme révélatrices de propriétés optiques du matériau constituant la partie du corps humain apposée sur la surface de contact 3, et en particulier de ses propriétés d'absorption et de diffusion. La variation d'intensité lumineuse dans l'image acquise, résultant de la nature sinusoïdale de la modulation d'intensité lumineuse de la mire lumineuse, peut être caractérisée par un paramètre de composante périodique et un paramètre de composante continue, qu'il est possible de déterminer pour vérifier l'authenticité du doigt. Les caractéristiques de la variation d'intensité lumineuse dans l'image acquise permettent ainsi de mettre en œuvre une méthode de détection de fraude pour authentifier que le doigt est un élément authentique d'un corps humain.

Dans ce but, le système de traitement automatisé de données 7 procède à une analyse (étape S3) de l'image acquise pour identifier dans celle-ci au moins un paramètre de composante périodique de la variation d'intensité lumineuse selon la direction principale et à la fréquence de mire. Puisque l'aspect sinusoïdal de la mire lumineuse se retrouve dans la variation lumineuse de l'image acquise, cette variation de l'intensité dans l'image acquise peut être modélisée par une fonction sinusoïdale prenant en variable une coordonnée x dans la direction principale $f_{A,B}(x) = A \times cos(2\pi f x + \varphi) + B$ avec A le paramètre de composante périodique, B le paramètre de composante continue, $\varphi$ une phase à l'origine et f la fréquence (spatiale) de mire. Le paramètre de composante périodique A correspond à l'amplitude de la fonction sinusoïdale prenant comme variable la coordonnée x selon la direction principale, et correspond donc dans l'image acquise à l'amplitude $\alpha$ de la sinusoïde de la lumière projetée sur le doigt. De même, le paramètre de composante continue B correspond dans l'image acquise à l'intensité moyenne $\beta$ de la sinusoïde de la lumière projetée sur le doigt.

La phase $\varphi$ et la fréquence de mire f sont connues, puisque non influencées par propriétés du matériau du doigt, et correspondent donc à la phase et la fréquence de mire de la mire lumineuse. Il y conservation de la phase $\varphi$ et de la fréquence de mire f. En revanche, les valeurs respectives de A et de $\alpha$ diffèrent, comme celles de B et de $\beta$, mais sont liées entre elles. Le paramètre de composante périodique A et le paramètre de composante continue B dépendent ainsi non seulement de l'amplitude $\alpha$ d et de l'intensité moyenne $\beta$ de la sinusoïde de la lumière projetée sur le doigt, respectivement, mais également du matériau constituant le doigt. Ce sont donc ces deux paramètres qui sont utilisés pour détecter les faux doigts avec une méthode de détection de fraude. Ces deux paramètres sont déterminés par l'analyse de l'image.

Dans une première variante, l'analyse de l'image peut comprendre le calcul de la transformée de Fourier de la distribution d'intensité lumineuse de l'image acquise. Le paramètre de composante périodique A est alors déterminé à partir d'une amplitude à la fréquence de mire f. Plus précisément, le paramètre de composante périodique A correspond au module du coefficient de la transformée de Fourier à la fréquence de mire. Le paramètre de composante continue B correspond plus simplement à la moyenne des intensités lumineuses de l'image acquise.

Cette approche présente l'avantage d'être facile à mettre en œuvre, et de ne pas nécessiter trop de calculs. Toutefois, le paramètre de composante périodique A peut être imprécis. En effet, l'image acquise n'a pas une étendue infinie, de même que la présence de la variation d'intensité lumineuse dans l'image acquise, ce qui entraîne des effets sur les résultats obtenus. De plus, la représentation du doigt dans l'image acquise, et de ses empreintes digitales, ne présente pas de périodicité dans la direction principale, de sorte que des artefacts sont introduits dans le calcul de la transformée de Fourier.

L'analyse de l'image acquise peut comprendre l'application à l'image acquise d'un filtre de Gabor pour obtenir une image filtrée, le paramètre de composante périodique A étant déterminé à partir de l'image filtrée. Un filtre de Gabor est un filtre linéaire dont la réponse impulsionnelle est une sinusoïde modulée par une fonction gaussienne. Pour le traitement de l'image acquise, le filtre de Gabor peut être exprimé sous une forme complexe :

$$G(x, y) = \exp\left(2\pi j \left(f_x x + f_y y\right) + \phi\right) \times \exp\left(-\left(\frac{(x - x_0)^2}{\sigma_x^2} - \frac{(y - y_0)^2}{\sigma_y^2}\right)\right)$$

avec $f_x$ la fréquence spatiale des variations dans la direction principale (coordonnée x), $f_y$ la fréquence spatiale des variations dans l'autre direction (coordonnée y), perpendiculaire à la direction principale. Dans le cas où seule une variation dans la direction principale est recherchée, $f_y = 0$. Les paramètres $\sigma_x^2$ et $\sigma_y^2$ sont les variances d'une gaussienne.

φ est une phase. $x_0$ et $y_0$ sont des coordonnées d'origine.

Sous une forme simplifiée, et notamment dans la mesure où seule la variation d'intensité lumineuse selon la direction principale est recherchée (et donc $f_y = 0$), on a :

$$G(x) = \exp\left(2\pi j(fx +)\right) \times \exp\left(-\frac{x^2}{\sigma^2}\right)$$

Typiquement, σ est de l'ordre de la période de la mire (inverse de la fréquence de mire f), par exemple 2 à 6 fois la période de la mire. Il est possible également d'utiliser un masque pour tronquer le filtre de Gabor pour le restreindre à une certaine dimension, par exemple à σ/3 dans la direction principale.

On applique ensuite à l'image acquise le filtre de Gabor, c'est-à-dire qu'on calcule la convolution entre l'image acquise et le filtre de Gabor. Le filtre de Gabor se comporte comme un passe-bas, qui conserve essentiellement l'oscillation due à la mire, mais supprime les éléments de plus haute fréquence spatiale, et en particulier les empreintes digitales. L'image filtrée conserve donc essentiellement la variation sinusoïdale de l'intensité lumineuse dans l'image acquise selon la direction principale à la fréquence de mire.

Comme l'application du filtre de Gabor conserve essentiellement l'oscillation sinusoïdale, l'amplitude des variations des niveaux de gris dans l'image filtrée est représentative de l'amplitude de l'oscillation sinusoïdale dans l'image acquise, c'est-à-dire du paramètre de composante périodique A. Il est donc possible de déterminer un estimateur du paramètre de composante périodique A à partir de l'image filtrée. On peut donc calculer un module de Gabor de l'image filtrée, correspondant à la somme des modules de chaque point de l'image filtrée, qui constitue alors le paramètre de composante périodique A. Comme précédemment, le deuxième paramètre de composante continue B correspond à la moyenne des valeurs des pixels de l'image acquise.

Il est possible, afin d'améliorer la détermination des valeurs du paramètre de composante périodique A et du paramètre de composante continue B d'appliquer le filtre de Gabor sur plusieurs parties constituants l'image acquise, et de déterminer des valeurs locales pour les paramètres pour chaque partie, à partir desquels les valeurs du paramètre de composante périodique A et du paramètre de composante continue B sont déterminées pour l'image entière, par exemple avec une moyenne. Dans cette approche, il est possible de ne pas prendre en compte des valeurs aberrantes pouvant provenir de défaut dans l'acquisition de l'image.

Il est possible, pour la mise en œuvre de l'étape S3 d'analyse de l'image acquise pour identifier une valeur du paramètre de composante périodique et une valeur du paramètre de composante continue, de distinguer entre les pixels de crête et les pixels de vallée. Il est ainsi possible de n'utiliser que les pixels de vallée ou que les pixels de crête, à la place de l'ensemble des pixels. Par exemple, le calcul de la moyenne peut être restreint aux seules valeurs des pixels de vallée ou des pixels de crête. Il est aussi possible de calculer d'abord une moyenne des valeurs des seuls pixels de vallée ou des pixels de crête selon une direction perpendiculaire à la direction principale, puis d'appliquer ensuite un filtre de Gabor unidirectionnel selon la direction principale.

En raison de la différence de luminosité entre les pixels de crête et les pixels de vallée, une variation spatiale indépendante de celle causée par la mire peut apparaître en fonction de la répartition spatiale des crêtes et des vallées des dermatoglyphes. En particulier, la proportion de pixels de crêtes et de vallées dans chaque ligne varie avec le motif des dermatoglyphes, ce qui peut introduire du bruit dans l'analyse de l'image. L'utilisation des seuls pixels de crête ou des seuls pixels de vallée permet donc de s'affranchir des variations spatiales de luminosité sur l'image acquise causées par la différence. Le procédé peut ainsi comprendre préalablement à l'étape d'analyse S3 une étape d'identification des pixels de crête et/des pixels de vallée, et une ou plusieurs étapes subséquentes du procédé est ensuite restreinte à ces pixels.

Une fois déterminés la valeur du paramètre de composante continue B et la valeur du paramètre de composante périodique A, le système de traitement automatisé de données 7 met en œuvre une méthode de détection de fraude (étape S4) pour authentifier que la partie du corps humain est un élément authentique d'un corps humain sur la base des valeurs de ces deux paramètres. Toutes les méthodes permettant de détecter les fraudes et donc d'authentifier ou non le doigt sur la base de ces paramètres peuvent être utilisées. De façon connue, on utilise pour la détection de fraude une base de données construite à partir d'un ensemble de doigts authentiques et de faux doigts. Il est par exemple possible d'utiliser un classifieur pour déterminer si le doigt apposé sur la surface de contact 3 est un vrai doigt authentique ou un faux doigt, l'apprentissage du classifieur se faisant sur une base d'apprentissage regroupant vrais doigts et faux doigts. De préférence, le classifieur est une machine à vecteurs de support. Il est également possible d'utiliser un réseau neuronal convolutif ou un réseau de neurone issu d'un apprentissage profond. Plus simplement, des approches statistiques peuvent être utilisées, par exemple en comparant les paramètres déterminés avec des seuils.

Le paramètre de composante périodique A déterminé via la transformée de Fourier ou l'application du filtre de Gabor est représentatif de l'amplitude de l'oscillation sinusoïdale de l'intensité lumineuse dans l'image acquise, elle-même résultant de l'oscillation sinusoïdale de la modulation sinusoïdale d'intensité lumineuse de la mire lumineuse.

Toutefois, le paramètre de composante périodique A peut ne pas exactement correspondre à la meilleure approximation de cette amplitude de l'oscillation sinusoïdale, car chaque objet présenté au capteur 1, faux ou vrai doigt, a une réponse en amplitude différente qui dépend de nombreuses conditions. Il en va de même pour le paramètre de composante continue B. Néanmoins, pour la mise en œuvre de la méthode de détection de fraude, cela n'a pas d'importance puisque qu'un biais affectant éventuellement ce paramètre sera pris en compte dans les données auxquelles le paramètre sera comparé.

La méthode de détection de fraude pour authentifier que la partie du corps humain est un élément authentique d'un corps humain peut avoir comme résultat l'indication soit que le doigt est considéré comme faux, c'est-à-dire que la partie du corps humain n'est pas authentifiée et est jugée comme étant une fraude, soit que le doigt est considéré comme vrai, c'est-à-dire que la partie du corps humain est authentifiée. Alternativement à ce résultat binaire, il est également possible que la méthode de détection de fraude pour authentifier que la partie du corps humain est un élément authentique d'un corps humain résulte en un indicateur d'authenticité, comme par exemple un score ou une valeur de probabilité que la partie du corps humain présentée est authentique. Il est alors possible de procéder sur la base de l'indication d'authenticité à une décision quant à l'authenticité de la partie du corps humain présentée, par exemple en fonction d'autres indicateurs d'authenticité résultant d'autres méthodes de détection de fraude, notamment en utilisant un classifieur ou un réseau de neurones.

En fonction du résultat de la méthode de détection de fraude pour authentifier que la partie du corps humain est un élément authentique d'un corps humain, éventuellement finalisée par une décision, plusieurs approches peuvent être adoptées : le procédé peut être arrêté, une information d'alerte peut être émise, ou la compensation de l'oscillation sinusoïdale de la mire lumineuse et la reconnaissance d'identité biométrique décrites ci-dessous peuvent être mises en œuvre. Ces deux dernières mises en œuvre peuvent d'ailleurs être indépendantes de la méthode détection de fraude, et être faites en parallèle, voire même préalablement.

Typiquement, si le doigt est considéré comme faux, c'est-à-dire si la partie du corps humain n'est pas authentifiée et est jugée comme étant une fraude, alors le procédé peut être arrêté, et des mesures appropriées peuvent être prises (génération d'un signal d'alarme, etc.) comme habituellement avec les méthodes de détection de fraude.

Si le doigt est considéré comme vrai, c'est-à-dire si la partie du corps humain est authentifiée, le système de traitement automatisé de données 7 met en œuvre une compensation (étape S5) de l'oscillation de la mire lumineuse dans l'image acquise par multiplication de l'intensité de l'image acquise par une fonction d'un paramètre de correction a dérivé du paramètre de composante périodique A préalablement déterminé, afin d'obtenir une image compensée. La compensation de la mire lumineuse dans l'image acquise vise à fournir aux algorithmes de comparaison d'empreintes digitales une image plus représentative de la réalité physique, c'est-à-dire de l'apparence des dermatoglyphes, et sans artefacts pouvant l'impacter ayant pour origine la modulation sinusoïdale d'intensité lumineuse dans la mire.

Plus précisément, la fonction du paramètre de correction correspond à l'inverse d'une fonction sinusoïdale de correction ayant le paramètre de correction comme amplitude et prenant comme variable une coordonnée x selon la direction principale. La fonction de correction $f_a(x)$ correspond à $f_a(x)=a\times cos(2\pi fx+\varphi)+b$ avec a le paramètre de correction, f la fréquence de mire, $\varphi$ une phase, et b une constante réelle.

La compensation consiste donc à diviser les valeurs des pixels de l'image acquise par les valeurs correspondantes prises par la fonction sinusoïdale de correction pour obtenir l'image corrigée :

$$Image\ compensée = image\ acquise\ /\ f_a(x).$$

Les valeurs de pixels de l'image acquise sont en effet considérées comme résultant d'une multiplication des valeurs des pixels correspondant d'une image du doigt sans mire lumineuse, qui est recherchée en tant qu'image compensée, par une fonction sinusoïdale représentative de l'oscillation sinusoïdale de l'intensité lumineuse. Il suffit donc de diviser ces valeurs par la fonction de correction pour retrouver l'image compensée.

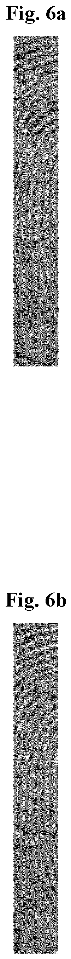

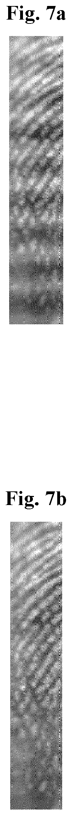

La figures 6a montre un exemple d'image acquise d'un doigt authentique éclairé par la source lumineuse 4, tandis que la figure 7a montre un exemple d'image acquise d'un doigt authentique éclairé par la source lumineuse 4. Les deux images présentent donc une variation d'intensité lumineuse de bas en haut causée par la mire lumineuse, et en particulier présentent une oscillation sinusoïdale de l'intensité lumineuse.

Les figures 6b et 7b montrent des exemples d'images compensée au moyen d'une fonction de compensation, correspondant respectivement aux images acquises illustrées par les figures 6a et 7a. On constate qu'il ne reste plus de traces d'une quelconque variation sinusoïdale d'intensité lumineuse dans la direction de bas en haut. L'oscillation sinusoïdale a donc été correctement compensée.

L'image compensée peut ensuite être utilisée pour mettre en œuvre une méthode de reconnaissance biométrique d'identité (étape S6) sur cette image compensée, sans que la variation d'intensité lumineuse dans l'image acquise due à la mire lumineuse ne gêne la reconnaissance biométrique d'identité. La reconnaissance biométrique d'identité peut comprendre l'exploitation des empreintes papillaires dans l'image compensée, par des procédés conventionnels de reconnaissance biométrique d'identité, typiquement basé sur la détection de minuties dans les empreintes et leur comparaison avec une base de données. L'image compensée peut aussi être utilisée pour être stockée dans une base de données, ou pour en extraire des informations telles que les minuties pour alimenter la base de données, par exemple dans un processus d'enrôlement de la personne apposant son doigt sur la surface de contact 3 du capteur 1, afin que cette personne puisse ultérieurement être identifiée.

L'image compensée peut être affichée sur un écran à destination d'un utilisateur, typiquement la personne apposant son doigt sur la surface de contact 3 du capteur 1. La compensation de la mire lumineuse permet de cacher la méthode de détection de fraude biométrique mise en œuvre. Une personne cherchant à frauder la méthode de reconnaissance biométrique d'identité avec un faux doigt n'a alors pas accès, par l'intermédiaire du retour visuel qui affiche l'image sur un écran, à l'information selon laquelle une variation sinusoïdale d'intensité lumineuse selon la direction principale est utilisée, ni à des caractéristiques telles que l'amplitude de l'oscillation sinusoïdale ou la fréquence de mire.

Il est à noter que seule l'oscillation sinusoïdale doit être compensée. La composante continue n'a besoin spécifiquement d'être corrigée, car elle signifie simplement une translation de toutes les valeurs des pixels, et donc un éclaircissement global ou un assombrissement global de l'image compensée par rapport à l'image acquise. Toutefois, la composante continue peut être corrigée à l'instar des procédés conventionnels de l'état de la technique utilisant un éclairage uniforme.

Il est donc possible de fixer une valeur constante prédéterminée au paramètre continu b de la fonction de correction. Typiquement, avec $b=1$, on obtient une fonction de correction variant (sinusoïdalement) autour de 1, de sorte que la compensation ne modifie pas les valeurs moyennes des pixels de l'image. Il est cependant possible de prendre une valeur différente de 1, afin d'éviter par exemple d'éventuelles saturations. La fixation du paramètre continu b fait que seul le paramètre de correction a doit être déterminé. Ce paramètre de correction a est dérivé du paramètre de composante périodique A déterminé plus haut.

Dans une première approche, la valeur du paramètre de correction a peut simplement correspondre à la valeur du paramètre de composante périodique A précédemment obtenue, divisée par la valeur du paramètre de composante continue B de l'image acquise, que la valeur du paramètre de composante périodique A ait été obtenue par la transformée de Fourier ou par l'application du filtre de Gabor. Toutefois, comme indiqué plus haut, la valeur du paramètre de composante périodique A obtenue via la transformée de Fourier ou par l'application du filtre de Gabor peut ne pas correspondre à la meilleure valeur pour le paramètre de correction. La compensation de la mire dans l'image compensée peut alors n'être pas totale.

Il est donc préférable de déterminer, à partir du paramètre de composante périodique A, un paramètre de correction a permettant de compenser la mire avec une plus grande précision.

A cette fin, il est possible de rechercher de façon itérative le paramètre de correction a. Pour une pluralité de valeurs du paramètre de correction a, autour de la valeur du paramètre de composante périodique A, les étapes suivantes sont mises en œuvre :

- l'image acquise est compensée par une fonction de correction prenant le paramètre de correction a comme paramètre et prenant comme variable la coordonnée x dans la direction principale, comme indiqué précédemment, pour obtenir une image compensée ;
- le filtre de Gabor est appliqué à l'image compensée pour obtenir une image filtrée ;
- un module de Gabor de l'image filtrée est calculé.

Le filtre de Gabor est ici utilisé pour mesurer la présence de l'oscillation sinusoïdale dans l'image compensée. On cherche donc à minimiser le module de Gabor obtenu, puisque la minimisation du module indique la minimisation de la présence de l'oscillation sinusoïdale dans l'image compensée. La valeur du paramètre de compensation a retenue à la fin des itérations est la valeur qui permet d'obtenir le plus petit module de Gabor.

Il est possible de résumer cette approche itérative au moyen d'une fonction objectif, qui prend en entrée une valeur à tester du paramètre de correction a, et fournit en sortie le module de Gabor de l'image filtrée. La recherche de la valeur optimale du paramètre de correction revient à rechercher à minimiser cette fonction objectif.

Il est possible de tester ainsi tout un ensemble de valeurs du paramètre de correction a autour de la valeur du paramètre de composante périodique A. Afin de limiter les calculs et d'accélérer la mise en œuvre du procédé, il est également possible de mettre en œuvre une optimisation du choix des valeurs du paramètre de correction a, et par exemple d'utiliser un algorithme de descente de gradient pour déterminer les valeurs à tester du paramètre de correction a.

Cette approche permet d'obtenir une valeur optimale du paramètre de correction a, qui appliqué à la compensation de la mire dans l'image acquise permet de compenser suffisamment la variation d'intensité lumineuse selon la direction principale de sorte que l'oscillation sinusoïdale ne soit plus présente dans l'image acquise. Il est à noter que cette approche de la recherche d'une valeur optimale du paramètre de correction a peut être également mise en œuvre pour l'étape S3 d'analyse de l'image dans le but de détecter les fraudes.

Toutefois, cette approche demande de lourds calculs, et requiert donc d'importantes ressources matérielles, et du temps de calcul qui peut être trop important. Une autre approche consiste donc à utiliser la valeur du paramètre de composante périodique déterminée via la transformée de Fourier ou l'application du filtre de Gabor pour rechercher dans une base de données une valeur du paramètre de correction associé à cette valeur du paramètre de composante périodique. La base de données est par exemple constituée à partir d'une base d'apprentissage d'images acquises pour lesquelles a été mise en œuvre la détermination de la valeur du paramètre de composante périodique via la transformée de Fourier ou l'application du filtre de Gabor et la détermination du paramètre de correction par l'approche itérative décrite plus haut. A partir de cet ensemble de couples valeur du paramètre de composante périodique-valeur du paramètre de correction, la base de données peut être complétée par exemple par interpolation type régression linéaire pour pourvoir associer une valeur du paramètre de correction à chaque valeur du paramètre de composante périodique déterminée via la transformée de Fourier ou l'application du filtre de Gabor. Cette approche permet de déterminer une valeur de paramètre de correction plus adaptée à la compensation de la mire, sans avoir besoin de mettre à chaque fois en œuvre la détermination itérative de la valeur du paramètre de composante périodique.

L'invention n'est pas limitée au mode de réalisation décrit et représenté aux figures annexées. Des modifications restent possibles, notamment du point de vue de la constitution des diverses caractéristiques techniques ou par substitution d'équivalents techniques, sans sortir pour autant du domaine de protection de l'invention défini par les revendications.

**Revendications**

1. Dispositif d'acquisition et de traitement biométrique d'une image d'une partie du corps humain présentant des dermatoglyphes, comprenant :

    - une surface de contact (3) configurée pour que la partie du corps humain soit apposée sur cette surface de contact (3),
    - une source lumineuse (4) configurée pour éclairer la surface de contact (3),
    - un imageur (2) configuré pour acquérir une image de la partie du corps humain apposée sur la surface de contact (3),
    - un système de traitement automatisé de données (7) configuré pour recevoir l'image acquise par l'imageur,

    **caractérisé en ce que** la source lumineuse (4) est configurée pour projeter sur la partie du corps humain apposée sur la surface de contact (3) une mire lumineuse présentant une modulation sinusoïdale d'intensité lumineuse selon une direction principale avec une fréquence de mire, et **en ce que** le système de traitement automatisé de données (7) est configuré pour mettre en œuvre les étapes suivantes :

    a) analyse de l'image (S3) acquise pour identifier dans celle-ci au moins une valeur d'un paramètre de composante périodique et une valeur d'un paramètre de composante continue d'une variation d'intensité lumineuse selon la direction principale, la valeur du paramètre de composante périodique étant représentative d'une amplitude d'une oscillation sinusoïdale de l'intensité lumineuse dans l'image acquise selon la direction principale à la fréquence de mire, la valeur du paramètre de composante continue étant représentative d'une moyenne des intensités lumineuses dans l'image acquise ;
    b) mise en œuvre sur la base de la valeur du paramètre de composante continue et de la valeur du paramètre de composante périodique d'une méthode de détection de fraude (S4) pour authentifier que la partie du corps humain est un élément authentique d'un corps humain ;
    c) compensation (S5) de l'oscillation sinusoïdale de l'intensité lumineuse dans l'image acquise par multiplication de l'intensité de l'image acquise par une fonction de correction comprenant un paramètre de correction représentatif d'une amplitude d'une oscillation sinusoïdale de l'intensité lumineuse dans l'image acquise selon la direction principale à la fréquence de mire, afin d'obtenir une image compensée ;
    d) mise en œuvre (S6) d'une méthode de reconnaissance biométrique d'identité sur la base de l'image compensée.

2. Dispositif selon la revendication 1, dans lequel la fonction de correction correspond à l'inverse d'une fonction sinusoïdale prenant comme variable une coordonnée selon la direction principale et dont l'amplitude est la valeur du paramètre de correction.

3. Dispositif selon l'une quelconque des revendications précédentes, dans lequel le paramètre de composante périodique correspond à une amplitude d'une fonction sinusoïdale prenant comme variable une coordonnée selon la direction principale.

4. Dispositif selon l'une des revendications précédentes, dans lequel l'analyse de l'image comprend la détermination d'une transformée de Fourier de la distribution d'intensité de l'image, la valeur du paramètre de composante périodique étant déterminé à partir d'un coefficient de la transformée de Fourier à la fréquence de mire.

5. Dispositif selon l'une quelconque des revendications 1 à 3, dans lequel l'analyse de l'image comprend l'application à l'image acquise d'un filtre de Gabor pour obtenir une image filtrée, un paramètre du filtre de Gabor dans la direction principale correspondant à la fréquence de mire, la valeur du paramètre de composante périodique étant déterminée à partir de l'image filtrée.

6. Dispositif selon la revendication 5, dans lequel la valeur du paramètre de composante périodique est la somme des modules de chacun des points de l'image filtrée.

7. Dispositif selon l'une quelconque des revendications précédentes, dans lequel la valeur du paramètre de correction correspond à la valeur du paramètre de composante périodique divisé par le paramètre de composante continue.

8. Dispositif selon l'une des revendications 1 à 6, dans lequel la valeur du paramètre de correction est déterminée à partir de la valeur du paramètre de composante périodique en utilisant une base de données associant une valeur de paramètre de correction à une valeur du paramètre de composante périodique.

9. Dispositif selon l'une des revendications 1 à 6, dans lequel la valeur du paramètre de correction est déterminée de façon itérative par la mise en œuvre des étapes suivantes, pour une pluralité de valeurs à tester du paramètre de correction :

- l'image acquise est compensée par une fonction de correction prenant la valeur à tester du paramètre de correction comme paramètre et prenant comme variable la coordonnée dans la direction principale pour obtenir une image compensée ;
- application d'un filtre de Gabor à l'image compensée pour obtenir une image filtrée, un paramètre du filtre de Gabor dans la direction principale correspondant à la fréquence de mire ;
- détermination d'une mesure de la présence de l'oscillation sinusoïdale dans l'image filtrée ;

la valeur du paramètre de correction étant la valeur à tester qui présente la mesure de la présence de l'oscillation sinusoïdale dans l'image filtrée la plus basse.

10. Dispositif selon l'une quelconque des revendications précédentes, dans lequel la source lumineuse (4) est munie d'un masque (6) présentant une opacité variant sinusoïdalement dans la direction principale.

11. Dispositif selon l'une quelconque des revendications précédentes dans lequel la fréquence de mire est comprise entre 0,2 cycle/mm et 0,5 cycle/mm.

12. Procédé d'acquisition et de traitement d'une image d'une partie du corps humain présentant des dermatoglyphes, ledit procédé étant mis en œuvre par un dispositif comprenant :

- une surface de contact (3) configurée pour que la partie du corps humain soit apposée sur cette surface de contact (3),
- une source lumineuse (4) configurée pour éclairer la surface de contact (3),
- un imageur (2) configuré pour acquérir une image de la partie du corps humain apposée sur la surface de contact (3),
- un système de traitement automatisé de données (7) configuré pour recevoir l'image acquise par l'imageur,

le procédé comprenant les étapes suivantes :

- la source lumineuse (4) projette (S1) sur la partie du corps humain apposée sur la surface de contact (3) une mire lumineuse présentant une modulation sinusoïdale d'intensité lumineuse selon une direction principale avec une fréquence de mire ;
- l'imageur (2) acquiert (S2) une image de la partie du corps humain apposée sur la surface de contact (3) éclairée par la source lumineuse (4), et transmet l'image acquise au système de traitement automatisé de données (7) ;

- le système de traitement automatisé de données (7) analyse (S3) l'image acquise pour identifier dans celle-ci au moins une valeur d'un paramètre de composante périodique et une valeur d'un paramètre de composante continue d'une variation d'intensité lumineuse selon la direction principale, la valeur du paramètre de composante périodique étant représentative d'une amplitude d'une oscillation sinusoïdale de l'intensité lumineuse dans l'image acquise selon la direction principale à la fréquence de mire, la valeur du paramètre de composante continue étant représentative d'une moyenne des intensités lumineuses dans l'image acquise ;

- le système de traitement automatisé de données (7) met en œuvre sur la base de la valeur du paramètre de composante continue et de la valeur du paramètre de composante périodique une méthode de détection de fraude (S4) pour authentifier que la partie du corps humain est un élément authentique d'un corps humain ;

- le système de traitement automatisé de données (7) compense (S5) l'oscillation sinusoïdale de l'intensité lumineuse dans l'image acquise par multiplication de l'intensité de l'image acquise par une fonction de correction comprenant un paramètre de correction représentatif d'une amplitude d'une oscillation sinusoïdale de l'intensité lumineuse dans l'image acquise selon la direction principale à la fréquence de mire, afin d'obtenir une image compensée ;

- le système de traitement automatisé de données (7) met en œuvre une méthode de reconnaissance biométrique d'identité (S6) sur la base de l'image compensée.

**Patentansprüche**

1. Vorrichtung zur biometrischen Erfassung und Verarbeitung eines Bildes eines Teils des menschlichen Körpers, der Dermatoglyphen darstellt, umfassend:

   - eine Kontaktoberfläche (3), die ausgestaltet ist, damit der Teil des menschlichen Körpers auf dieser Kontaktoberfläche (3) aufgedrückt ist,
   - eine Lichtquelle (4), die zum Beleuchten der Kontaktoberfläche (3) ausgestaltet ist,
   - einen Bildgeber (2), der zur Erfassung eines Bildes des Teils des menschlichen Körpers, der auf der Kontaktoberfläche (3) aufgedrückt ist, ausgestaltet ist,
   - ein automatisiertes Verarbeitungssystem von Daten (7), das zum Empfangen des vom Bildgeber erfassten Bildes ausgestaltet ist,

   **dadurch gekennzeichnet, dass** die Lichtquelle (4) zum Projizieren eines Licht-Testmusters, das eine sinusförmige Modulation der Lichtintensität gemäß einer Hauptrichtung mit einer Testmuster-Frequenz aufweist, auf den Teil des menschlichen Körpers, der auf der Kontaktoberfläche (3) aufgedrückt ist, ausgestaltet ist, und dass das automatisierte Verarbeitungssystem von Daten (7) ausgestaltet ist, um die folgenden Schritte umzusetzen:

   a) Analyse des Bildes (S3), das zum Identifizieren wenigstens eines Wertes eines Parameters einer periodischen Komponente und eines Wertes eines Parameters einer kontinuierlichen Komponente einer Lichtintensitätsvariation gemäß der Hauptrichtung in diesem erfasst ist, wobei der Wert des Parameters einer periodischen Komponente eine Amplitude einer sinusförmigen Schwingung der Lichtintensität in dem Bild darstellt, das gemäß der Hauptrichtung zur Testmuster-Frequenz erfasst ist, wobei der Wert des Parameters einer kontinuierlichen Komponente einen Durchschnitt der Leuchtintensitäten in dem erfassten Bild darstellt;

   b) Umsetzung basierend auf dem Wert des Parameters einer kontinuierlichen Komponente und des Wertes des Parameters einer periodischen Komponente eines Detektionsverfahrens von Betrug (S4) zum Authentifizieren, dass der menschliche Körper ein authentisches Element eines menschlichen Körpers ist;

   c) Kompensation (S5) der sinusförmigen Schwingung der Lichtintensität in dem Bild, das per Multiplikation der Intensität des Bildes erfasst ist, das von einer Korrekturfunktion erfasst ist, umfassend einen Korrekturparameter, der eine Amplitude einer sinusförmigen Schwingung der Lichtintensität in dem Bild darstellt, das gemäß der Hauptrichtung zur Testmuster-Frequenz erfasst ist, um ein kompensiertes Bild zu erhalten;

   d) Umsetzung (S6) eines biometrischen Identitäts-Erkennungsverfahrens basierend auf dem kompensierten Bild.

2. Vorrichtung gemäß Anspruch 1, bei der die Korrekturfunktion der Umkehrung einer sinusförmigen Funktion entspricht, die als Variable eine Koordinate gemäß der Hauptrichtung nutzt und deren Amplitude der Wert des Korrekturparameters ist.

3. Vorrichtung gemäß irgendeinem der voranstehenden Ansprüche, bei der der Parameter einer periodischen Komponente einer Amplitude einer sinusförmigen Funktion entspricht, die als Variable eine Koordinate gemäß der Hauptrichtung übernimmt.

4. Vorrichtung gemäß einem der voranstehenden Ansprüche, bei der die Analyse des Bildes die Bestimmung einer Fourier-Transformierten der Intensitätsverteilung des Bildes umfasst, wobei der Wert des Parameters einer periodischen Komponente ausgehend von einem Koeffizienten der Fourier-Transformierten zur Testmuster-Frequenz bestimmt ist.

5. Vorrichtung gemäß irgendeinem der Ansprüche 1 bis 3, bei der die Analyse des Bildes die Anwendung eines Parameters des Gabor-Filters in der Hauptrichtung, die der Testmuster-Frequenz entspricht, auf das Bild umfasst, das von einem Gabor-Filter erfasst ist, um ein gefiltertes Bild zu erhalten, wobei der Wert des Parameters einer periodischen Komponente ausgehend von dem gefilterten Bild bestimmt ist.

6. Vorrichtung gemäß Anspruch 5, bei der der Wert des Parameters einer periodischen Komponente die Summe der Module jedes Punktes des gefilterten Bildes ist.

7. Vorrichtung gemäß irgendeinem der voranstehenden Ansprüche, bei der der Wert des Korrekturparameters dem Wert des Parameters einer periodischen Komponente entspricht, der durch den Parameter einer kontinuierlichen Komponente dividiert ist.

8. Vorrichtung gemäß einem der Ansprüche 1 bis 6, bei der der Wert des Korrekturparameters ausgehend von dem Wert des Parameters einer periodischen Komponente unter Verwenden einer Datenbank bestimmt ist, die einen Wert eines Korrekturparameters einem Wert des Parameters einer periodischen Komponente zuordnet.

9. Vorrichtung gemäß einem der Ansprüche 1 bis 6, bei der der Wert des Korrekturparameters auf iterative Weise per Umsetzen der nachstehenden Schritte für eine Vielzahl von zu testenden Werten des Korrekturparameters bestimmt ist:

- das erfasste Bild ist durch eine Korrekturfunktion kompensiert, die den zu testenden Wert des Korrekturparameters als Parameter ansetzt und als Variable die Koordinate in der Hauptrichtung ansetzt, um ein kompensiertes Bild zu erhalten;
- Anwendung eines Gabor-Filters auf das kompensierte Bild zum Erhalten eines gefilterten Bildes, wobei ein Parameter des Gabor-Filters in der Hauptrichtung der Testmuster-Frequenz entspricht;
- Bestimmung einer Messung des Vorhandenseins der sinusförmigen Schwingung in dem gefilterten Bild;

wobei der Wert des Korrekturparameters der zu testende Wert ist, der die niedrigste Messung des Vorhandenseins der sinusförmigen Schwingung in dem gefilterten Bild darstellt.

10. Vorrichtung gemäß irgendeinem der voranstehenden Ansprüche, bei der die Lichtquelle (4) mit einer Maske (6) versehen ist, die eine Lichtundurchlässigkeit aufweist, die sinusförmig in der Hauptrichtung variiert.

11. Vorrichtung gemäß irgendeinem der voranstehenden Ansprüche, bei der die Testmuster-Frequenz zwischen 0,2 Zyklen/Min. und 0,5 Zyklen/Min. inbegriffen ist.

12. Verfahren zur Erfassung und Verarbeitung eines Bildes eines Teils des menschlichen Körpers, der Dermatoglyphen aufweist, wobei das genannte Verfahren durch eine Vorrichtung umgesetzt wird, umfassend:

- eine Kontaktfläche (3), die ausgestaltet ist, damit der Teil des menschlichen Körpers auf dieser Kontaktoberfläche (3) aufgedrückt wird,
- eine Lichtquelle (4), die zum Beleuchten der Kontaktoberfläche (3) ausgestaltet ist,
- einen Bildgeber (2), der zum Erfassen eines Bildes des Teils des menschlichen Körpers, der auf der Kontaktoberfläche (3) aufgedrückt ist, ausgestaltet ist,
- ein automatisiertes Verarbeitungssystem von Daten (7), das zum Empfangen des vom Bildgeber erfassten Bildes ausgestaltet ist,

wobei das Verfahren die folgenden Schritte umfasst:

- die Lichtquelle (4) projiziert (S1) ein Licht-Testmuster, das eine sinusförmige Modulation der Lichtintensität gemäß einer Hauptrichtung mit einer Testmuster-Frequenz darstellt, auf den Teil des menschlichen Körpers, der auf der Kontaktoberfläche (3) aufgedrückt ist;
- der Bildgeber (2) erfasst (S2) ein Bild des Teils des menschlichen Körpers, der auf der von der Lichtquelle (4) beleuchteten Kontaktoberfläche (3) aufgedrückt ist und überträgt das erworbene Bild auf das automatisierte Verarbeitungssystem von Daten (7);
- das automatisierte Verarbeitungssystem von Daten (7) analysiert (S3) das erfasste Bild, um darin wenigstens einen Wert eines Parameters einer periodischen Komponente und einen Wert eines Parameters einer kontinuierlichen Komponente einer LichtIntensitätsvariation gemäß der Hauptrichtung zu identifizieren, wobei der Wert des Parameters einer periodischen Komponente eine Amplitude einer sinusförmigen Schwingung der Lichtintensität in dem Bild darstellt, das gemäß der Hauptrichtung zur Testmuster-Frequenz erfasst wird, wobei der Wert des Parameters einer kontinuierlichen Komponente einen Durchschnitt der Lichtintensitäten in dem erfassten Bild darstellt
- das automatisierte Verarbeitungssystem von Daten (7) setzt basierend auf dem Wert des Parameters einer kontinuierlichen Komponente und des Wertes des Parameters einer periodischen Komponente ein Detektionsverfahren von Betrug (S4) zum Authentifizieren um, dass der Teil des menschlichen Körpers ein authentisches Element eines menschlichen Körpers ist;
- das automatisierte Verarbeitungsverfahren von Daten (7) kompensiert (S5) die sinusförmige Schwingung der Lichtintensität in dem Bild, das per Multiplikation der Intensität des Bildes erfasst wird, durch eine Korrekturfunktion, umfassend einen Korrekturparameter, der eine Amplitude einer sinusförmigen Schwingung der Lichtintensität in dem Bild darstellt, das gemäß der Hauptrichtung zur Testmuster-Frequenz erfasst wird, um ein kompensiertes Bild zu erhalten;
- das automatisierte Verarbeitungssystem von Daten (7) setzt ein biometrisches Erkennungsverfahren der Identität (S6) basierend auf dem kompensierten Bild um.

## Claims

1. Device for the biometric acquisition and processing of an image of a part of the human body presenting dermatoglyphs, comprising:

   - a contact surface (3) configured so that the part of the human body is affixed to this contact surface (3),
   - a light source (4) configured to illuminate the contact surface (3),
   - an imager (2) configured to acquire an image of the part of the human body affixed to the contact surface (3),
   - an automated data processing system (7) configured to receive the image acquired by the imager,

   **characterized in that** the light source (4) is configured to project on the part of the human body affixed to the contact surface (3) a light pattern having a sinusoidal modulation of light intensity according to a main direction with a target frequency, and **in that** the automated data processing system (7) is configured to perform the following steps:

   a) analysis of the acquired image (S3) to identify in it at least one value of a periodic component parameter and one value of a continuous component parameter of a variation in light intensity in accordance with the main direction, wherein the value of the periodic component parameter is representative of an amplitude of a sinusoidal oscillation of light intensity in the acquired image in accordance with the main direction at the target frequency, wherein the value of the continuous component parameter is representative of an average of the light intensities in the acquired image;
   b) implementation on the basis of the value of the continuous component parameter and the value of the periodic component parameter of a fraud detection method (S4) to authenticate that the part of the human body is an authentic feature of a human body;
   c) compensation (S5) of the sinusoidal oscillation of the light intensity in the acquired image by multiplying the intensity of the acquired image by a correction function comprising a correction parameter representative of an amplitude of a sinusoidal oscillation of the light intensity in the acquired image in accordance with the main direction at the target frequency, in order to obtain a compensated image;
   d) implementation (S6) of a biometric identity recognition method based on the compensated image.

2. A device according to claim 1, wherein the correction function corresponds to the inverse of a sinusoidal function taking as a variable a coordinate according to the main direction and whose amplitude is the value of the correction parameter;

3. A device according to any of the preceding claims, wherein the periodic component parameter corresponds to an amplitude of a sinusoidal function taking as a variable a coordinate according to the main direction;

4. A device according to one of the preceding claims, wherein the image analysis comprises determining a Fourier transform of the intensity distribution of the image, wherein the value of the periodic component parameter is determined from a coefficient of the Fourier transform at the target frequency.

5. A device according to any of the preceding claims, wherein the image analysis comprises applying to the acquired image a Gabor filter to obtain a filtered image, a parameter of the Gabor filter in accordance with the main direction corresponding to the target frequency, the value of the periodic component parameter being determined from the filtered image.

6. The device as recited in Claim 5, wherein the value of the periodic component parameter is the sum of the modules of each of the points of the filtered image.

7. A device according to any of the preceding claims, wherein the value of the correction parameter corresponds to the value of the periodic component parameter divided by the continuous component parameter.

8. A device according to one of the preceding claims, wherein the value of the correction parameter is determined from the value of the periodic component parameter using a database associating a correction parameter value with a value of the periodic component parameter.

9. Device according to one of the preceding claims, in which the value of the correction parameter is determined iteratively by the implementation of the following steps, for a plurality of values to be tested of the correction parameter:

   - the acquired image is compensated by a correction function taking the value of the correction parameter to be tested as a parameter and taking the coordinate in accordance with the main direction as a variable to obtain a compensated image;
   - application of a Gabor filter to the compensated image to obtain a filtered image, a parameter of the Gabor filter in accordance with the main direction corresponding to the target frequency;
   - determination of a measurement of the presence of sinusoidal oscillation in the filtered image;

   wherein the value of the correction parameter is the value to be tested which provides the measurement of the presence of the sinusoidal oscillation in the lowest filtered image.

10. Device according to any of the preceding claims, wherein the light source (4) is provided with a mask (6) presenting a sinusoidally variable opacity in accordance with the main direction.

11. Device according to any of the preceding claims wherein the target frequency is between 0.2 cycle/mm and 0.5 cycle/mm.

12. A method of acquiring and processing an image of a part of the human body having dermatoglyphs, said method being carried out by a device comprising:

   - a contact surface (3) configured so that the part of the human body is affixed to this contact surface (3),
   - a light source (4) configured to illuminate the contact surface (3),
   - an imager (2) configured to acquire an image of the part of the human body affixed to the contact surface (3),
   - an automated data processing system (7) configured to receive the image acquired by the imager,

   the method comprising the following steps:

   - the light source (4) projects (S1) onto the part of the human body affixed to the contact surface (3) a light pattern having a sinusoidal modulation of light intensity in a main direction with a target frequency;
   - the imager (2) acquires (S2) an image of the part of the human body affixed to the contact surface (3) illuminated by the light source (4), and transmits the acquired image to the automated data processing system (7);
   - the automated data processing system (7) analyzes (S3) the acquired image to identify in it at least one value of a periodic component parameter and one value of a continuous component parameter of a variation in light intensity in accordance with the main direction, the value of the periodic component parameter being representative of an amplitude of a sinusoidal oscillation of the light intensity in the acquired image in accordance with the main direction at the target frequency, the value of the continuous component parameter being representative of an average of the light intensities in the acquired image;

- the automated data processing system (7) implements on the basis of the value of the continuous component parameter and the value of the periodic component parameter a fraud detection method (S4) to authenticate that the part of the human body is an authentic feature of a human body;
- the automated data processing system (7) compensates (S5) the sinusoidal oscillation of the light intensity in the acquired image by multiplying the intensity of the acquired image by a correction function comprising a correction parameter representative of an amplitude of a sinusoidal oscillation of the light intensity in the acquired image in accordance with the main direction at the target frequency, in order to obtain a compensated image;
- the automated data processing system (7) implements a biometric identity recognition method (S6) based on the compensated image.

## Fig. 1

Système de traitement

## Fig. 2

**Fig. 3**

| | |
|---|---|
| Projection de la mire lumineuse | S1 |

↓

| | |
|---|---|
| Acquisition de l'image | S2 |

↓

| | |
|---|---|
| Analyse de l'image | S3 |

↓

| | |
|---|---|
| Détection de fraude | S4 |

↓

| | |
|---|---|
| Compensation de l'oscillation sinusoïdale | S5 |

↓

| | |
|---|---|
| Reconnaissance biométrique d'identité | S6 |

**Fig. 4a**

**Fig. 4b**

## Fig. 5a

## Fig. 5b

**Fig. 6a**

**Fig. 6b**

Fig. 7a

Fig. 7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3413233 A1

- FR 2849246 A1